# EUROPEAN PATENT APPLICATION

(11) **EP 4 783 706 A1**
(43) Date of publication of application: **29.07.2026**
(21) Application number: 24870677.2
(22) Date of filing: 24.09.2024
(51) Int. Cl.: H04W 72/40

(54) **METHOD FOR SCHEDULING SIDELINK POSITIONING REFERENCE SIGNAL RESOURCE, AND COMMUNICATION APPARATUS**

(30) Priority: 28.09.2023 CN 202311294512
(71) Applicant: HUAWEI TECHNOLOGIES CO., LTD., Shenzhen 518129 (CN)
(72) Inventor: LI, Cheng, Shenzhen, Guangdong 518129 (CN); HUANG, Su, Shenzhen, Guangdong 518129 (CN); XIA, Jinhuan, Shenzhen, Guangdong 518129 (CN)
(74) Representative: Pfenning, Meinig & Partner mbB
(86) International application number: PCT/CN2024/120543
(87) International publication number: WO 2025/067133

(57) **Abstract**

A sidelink positioning reference signal resource scheduling method and a communication apparatus are provided, to implement semi-persistent scheduling of a sidelink positioning reference signal resource, thereby reducing signaling overheads. The method may include: receiving downlink control information from a network device, where the downlink control information includes a first field and a second field, the first field is for determining a sidelink positioning reference signal resource, and the second field indicates to activate or deactivate the sidelink positioning reference signal resource; and in response to a value of the second field, activating the sidelink positioning reference signal resource; or in response to a value of the second field, deactivating the sidelink positioning reference signal resource.

## Description

This application claims priority to Chinese Patent Application No. 202311294512.9, filed with the China National Intellectual Property Administration on September 28, 2023 and entitled "SIDELINK POSITIONING REFERENCE SIGNAL RESOURCE SCHEDULING METHOD AND COMMUNICATION APPARATUS", which is incorporated herein by reference in its entirety.

### TECHNICAL FIELD

This application relates to the field of communication technologies, and in particular, to a sidelink positioning reference signal resource scheduling method and a communication apparatus.

### BACKGROUND

A sidelink (sidelink, SL) is a near field communication technology in which terminal devices directly exchange information with each other through a PC5 interface. For application scenarios such as vehicle to everything (vehicle to everything, V2X) and industrial internet of things (industrial internet of things, IIoT), the 3rd generation partnership project (3rd generation partnership project, 3GPP) has proposed SL positioning, and the SL positioning may be implemented by transmitting a sidelink positioning reference signal. For example, mutual positioning, for example, ranging or angle measurement, may be implemented between two terminal devices by sending sidelink positioning reference signals. The sidelink positioning reference signal may also be referred to as a sidelink positioning reference signal for short.

A resource for transmitting a sidelink positioning reference signal may be referred to as a sidelink positioning reference signal resource. How to implement semi-persistent scheduling of the sidelink positioning reference signal resource is currently a research hotspot.

### SUMMARY

Embodiments of this application provide a sidelink positioning reference signal resource scheduling method and a communication apparatus, to implement semi-persistent scheduling of a sidelink positioning reference signal resource, thereby reducing signaling overheads.

According to a first aspect, an embodiment of this application provides a sidelink positioning reference signal resource scheduling method. The method may be performed by a terminal device, or may be performed by an apparatus matching a terminal device, for example, performed by a processor, a chip, or a chip system. The method may include: receiving downlink control information from a network device, where the downlink control information includes a first field and a second field, the first field is for determining a sidelink positioning reference signal resource, and the second field indicates to activate or deactivate the sidelink positioning reference signal resource; and in response to a value of the second field, activating the sidelink positioning reference signal resource; or in response to a value of the second field, deactivating the sidelink positioning reference signal resource.

It can be learned that, with reference to the first field and the second field in the downlink control information, the terminal device may activate or deactivate the sidelink positioning reference signal resource, to implement semi-persistent scheduling of the sidelink positioning reference signal resource, thereby reducing signaling overheads.

In a possible implementation, the second field is an activation indication field, and a field length of the activation indication field is 1 bit.

When a value of the activation indication field is a first value and the sidelink positioning reference signal resource is in an inactive state, the activation indication field indicates to activate the sidelink positioning reference signal resource.

When a value of the activation indication field is a second value and the sidelink positioning reference signal resource is in an activated state, the activation indication field indicates to deactivate the sidelink positioning reference signal resource. The first value is the same as or different from the second value.

In other words, the value of the 1-bit activation indication field indicates to activate or deactivate the sidelink positioning reference signal resource, and the sidelink positioning reference signal resource is determined based on the first field in the downlink control information, so that the terminal device can activate or deactivate the sidelink positioning reference signal resource based on the value of the 1-bit activation indication field. In this way, semi-persistent scheduling of the sidelink positioning reference signal resource can be implemented, and activation or deactivation can be indicated by using small signaling overheads.

In another possible implementation, the second field is an activation indication field, and a field length of the activation indication field is 2 bits.

When a value of the activation indication field is a third value, the activation indication field indicates to activate the sidelink positioning reference signal resource; or when a value of the activation indication field is a fourth value, the activation indication field indicates to deactivate the sidelink positioning reference signal resource.

Optionally, when the value of the activation indication field is the third value and the sidelink positioning reference signal resource is in an inactive state, the activation indication field indicates to activate the sidelink positioning reference signal resource.

When the value of the activation indication field is the fourth value and the sidelink positioning reference signal resource is in an activated state, the activation indication field indicates to deactivate the sidelink positioning reference signal resource. The third value is different from the fourth value.

In other words, the value of the 2-bit activation indication field indicates to activate or deactivate the sidelink positioning reference signal resource, and the sidelink positioning reference signal resource is determined based on the first field in the downlink control information, so that the terminal device can activate or deactivate the sidelink positioning reference signal resource based on the value of the 2-bit activation indication field. In this way, semi-persistent scheduling of the sidelink positioning reference signal resource can be implemented. When activation or deactivation is indicated, the third value and the fourth value in values of the 2 bits are used, and another value may indicate another function, so that the values of the 2 bits can indicate a plurality of functions, thereby reducing signaling overheads.

In still another possible implementation, the second field is a time domain scheduling field.

When a value of the time domain scheduling field is a fifth value, the time domain scheduling field indicates to activate the sidelink positioning reference signal resource; or when a value of the time domain scheduling field is a sixth value, the time domain scheduling field indicates to deactivate the sidelink positioning reference signal resource.

Optionally, when the value of the time domain scheduling field is the fifth value and the sidelink positioning reference signal resource is in an inactive state, the time domain scheduling field indicates to activate the sidelink positioning reference signal resource.

When the value of the time domain scheduling field is the sixth value and the sidelink positioning reference signal resource is in an activated state, the time domain scheduling field indicates to deactivate the sidelink positioning reference signal resource. The fifth value is different from the sixth value.

Generally, the time domain scheduling field indicates time domain information, for example, slot information, of the sidelink positioning reference signal resource. In this application, the time domain scheduling field further indicates to activate or deactivate the sidelink positioning reference signal resource, and the sidelink positioning reference signal resource is determined based on the first field in the downlink control information. In other words, the value of the time domain scheduling field is reused to indicate to activate or deactivate the sidelink positioning reference signal resource, so that the terminal device can activate the sidelink positioning reference signal resource based on the value of the time domain scheduling field being the fifth value, or deactivate the sidelink positioning reference signal resource based on the value of the time domain scheduling field being the sixth value. In this way, semi-persistent scheduling of the sidelink positioning reference signal resource can be implemented, and signaling overheads can be reduced. There is no need to add an additional field to the downlink control information to indicate activation or deactivation, so that modifications to the downlink control information are small.

Optionally, the method further includes: receiving a first parameter and/or a second parameter from the network device, where the first parameter indicates the fifth value, and the second parameter indicates the sixth value. In other words, the network device configures the first parameter and/or the second parameter for the terminal device. The first parameter indicates to activate the sidelink positioning reference signal resource when the value of the time domain scheduling field is the fifth value; and the second parameter indicates to deactivate the sidelink positioning reference signal resource when the value of the time domain scheduling field is the sixth value. The network device configures the first parameter and/or the second parameter for the terminal device, so that the terminal device can determine which value of the time domain scheduling field can be used to activate the sidelink positioning reference signal resource and/or which value of the time domain scheduling field can be used to deactivate the sidelink positioning reference signal resource. It can be learned that the network device may flexibly configure the first parameter and/or the second parameter.

Optionally, the fifth value and the sixth value are predefined, for example, predefined in a protocol. In other words, when the value of the time domain scheduling field is fixed to the fifth value, the time domain scheduling field indicates to activate the sidelink positioning reference signal resource; or when the value of the time domain scheduling field is fixed to the sixth value, the time domain scheduling field indicates to deactivate the sidelink positioning reference signal resource. Compared with a case in which the network device configures the first parameter and/or the second parameter for the terminal device, signaling and radio resources can be saved in this case.

In still another possible implementation, the second field is a resource indication field.

When a value of the resource indication field is a seventh value or a first group of values, the resource indication field indicates to activate the sidelink positioning reference signal resource; or when a value of the resource indication field is an eighth value or a second group of values, the resource indication field indicates to deactivate the sidelink positioning reference signal resource.

Optionally, when the value of the resource indication field is the seventh value or the first group of values and the sidelink positioning reference signal resource is in an inactive state, the resource indication field indicates to activate the sidelink positioning reference signal resource.

When the value of the resource indication field is the eighth value or the second group of values and the sidelink positioning reference signal resource is in an activated state, the resource indication field indicates to deactivate the sidelink positioning reference signal resource. The seventh value is different from the eighth value, the first group of values includes one or more values, and the second group of values includes one or more values.

Generally, the resource indication field indicates an index of a scheduled sidelink positioning reference signal resource. In this application, the resource indication field further indicates to activate or deactivate the sidelink positioning reference signal resource. In other words, the value of the resource indication field is reused to indicate to activate or deactivate the sidelink positioning reference signal resource, so that the terminal device can activate or deactivate the sidelink positioning reference signal resource based on the value of the resource indication field. In this way, semi-persistent scheduling of the sidelink positioning reference signal resource can be implemented, and signaling overheads can be reduced. There is no need to add an additional field to the downlink control information to indicate activation or deactivation, so that modifications to the downlink control information are small.

Optionally, when an i^{th} sidelink positioning reference signal resource index indicated by the resource indication field is a ninth value or a third group of values, the resource indication field specifically indicates to activate the sidelink positioning reference signal resource; or when an i^{th} sidelink positioning reference signal resource index indicated by the resource indication field is a tenth value or a fourth group of values, the resource indication field specifically indicates to deactivate the sidelink positioning reference signal resource. i is an integer greater than 1, the third group of values includes one or more values, and the fourth group of values includes one or more values. It may be understood that when a plurality of sidelink positioning reference signal resource are semi-persistently scheduled, the i^{th} sidelink positioning reference signal resource index is the same as a 1^{st} sidelink positioning reference signal resource index by default. However, the i^{th} sidelink positioning reference signal resource index indicated by the resource indication field indicates to activate or deactivate the sidelink positioning reference signal resource.

Optionally, the method further includes: receiving a third parameter and/or a fourth parameter from the network device, where the third parameter indicates the ninth value or the third group of values, and the fourth parameter indicates the tenth value or the fourth group of values. In other words, the network device configures the third parameter and/or the fourth parameter for the terminal device. The third parameter indicates to activate the sidelink positioning reference signal resource when the value of the resource indication field is the ninth value or the third group of values; and the fourth parameter indicates to deactivate the sidelink positioning reference signal resource when the value of the resource indication field is the tenth value or the fourth group of values. The network device configures the third parameter and/or the fourth parameter for the terminal device, so that the terminal device can determine which value of the resource indication field can be used to activate the sidelink positioning reference signal resource and/or which value of the resource indication field can be used to deactivate the sidelink positioning reference signal resource. It can be learned that the network device may flexibly configure the third parameter and/or the fourth parameter.

Optionally, the ninth value and the tenth value are predefined, for example, predefined in a protocol. Alternatively, the third group of values and the fourth group of values are predefined. In other words, when the value of the resource indication field is fixed to the ninth value or the third group of values, the resource indication field indicates to activate the sidelink positioning reference signal resource; or when the value of the resource indication field is fixed to the tenth value or the fourth group of values, the resource indication field indicates to deactivate the sidelink positioning reference signal resource. Compared with a case in which the network device configures the third parameter and/or the fourth parameter for the terminal device, signaling and radio resources can be saved in this case.

In a possible implementation, the first field is a resource indication field. The resource indication field indicates an index of the sidelink positioning reference signal resource, in other words, indicates the sidelink positioning reference signal resource, so that the terminal device can determine the sidelink positioning reference signal resource based on a value of the resource indication field.

Optionally, the downlink control information further includes a configuration index field, the configuration index field indicates a configuration index, and a transmission period and/or a maximum quantity of transmissions of the sidelink positioning reference signal resource may be determined based on the configuration index. The configuration index field indicates the configuration index, and semi-persistent configuration information may be determined based on the configuration index. The semi-persistent configuration information includes the transmission period and/or the maximum quantity of transmissions.

Optionally, the method further includes: receiving first radio resource control (radio resource control, RRC) signaling from the network device, where the first RRC signaling is for configuring a transmission period and/or a maximum quantity of transmissions of the sidelink positioning reference signal resource. It may be understood that the first RRC signaling is for configuring semi-persistent configuration information, and the semi-persistent configuration information includes the transmission period and/or the maximum quantity of transmissions.

In another possible implementation, the first field is a configuration index field, the configuration index field indicates a configuration index, and the configuration index is associated with the sidelink positioning reference signal resource. In other words, the sidelink positioning reference signal resource associated with the configuration index, in other words, a semi-persistently scheduled sidelink positioning reference signal resource, may be determined based on the configuration index field. Compared with a case in which the sidelink positioning reference signal resource is determined based on the resource indication field in the downlink control information, in a case in which the sidelink positioning reference signal resource is determined based on the configuration index in the downlink control information, a bit length of the downlink control information is shorter.

Optionally, the configuration index field is further for determining a transmission period and/or a maximum quantity of transmissions of the sidelink positioning reference signal resource. The terminal device may further determine, based on the configuration index indicated by the configuration index field, the transmission period and/or the maximum quantity of transmissions of the sidelink positioning reference signal resource.

Optionally, the method further includes: receiving second RRC signaling from the network device, where the second RRC signaling is for configuring at least one of a transmission period, a maximum quantity of transmissions, or the sidelink positioning reference signal resource associated with the configuration index. It may be understood that the second RRC signaling is for configuring semi-persistent configuration information, and the semi-persistent configuration information includes at least one of the transmission period, the maximum quantity of transmissions, the configuration index, or the sidelink positioning reference signal resource associated with the configuration index.

According to a second aspect, an embodiment of this application provides a sidelink positioning reference signal resource scheduling method. The method may be performed by a network device, or may be performed by an apparatus matching the network device, for example, performed by a processor, a chip, or a chip system. The method may include: sending downlink control information to a terminal device, where the downlink control information includes a first field and a second field, the first field is for determining a sidelink positioning reference signal resource, and the second field indicates to activate or deactivate the positioning reference signal resource.

It can be learned that the network device may indicate, by using the first field and the second field in the downlink control information, the terminal device to activate or deactivate the sidelink positioning reference signal resource, to implement semi-persistent scheduling of the sidelink positioning reference signal resource, thereby reducing signaling overheads.

In a possible implementation, the second field is an activation indication field, and a field length of the activation indication field is 1 bit.

When a value of the activation indication field is a first value and the sidelink positioning reference signal resource is in an inactive state, the activation indication field indicates to activate the sidelink positioning reference signal resource.

When a value of the activation indication field is a second value and the sidelink positioning reference signal resource is in an activated state, the activation indication field indicates to deactivate the sidelink positioning reference signal resource. The first value is the same as or different from the second value.

In other words, the value of the 1-bit activation indication field indicates to activate or deactivate the sidelink positioning reference signal resource, and the sidelink positioning reference signal resource is determined based on the first field in the downlink control information, so that the terminal device can activate or deactivate the sidelink positioning reference signal resource based on the value of the 1-bit activation indication field. In this way, semi-persistent scheduling of the sidelink positioning reference signal resource can be implemented, and activation or deactivation can be indicated by using small signaling overheads.

In another possible implementation, the second field is an activation indication field, and a field length of the activation indication field is 2 bits.

When a value of the activation indication field is a third value, the activation indication field indicates to activate the sidelink positioning reference signal resource; or when a value of the activation indication field is a fourth value, the activation indication field indicates to deactivate the sidelink positioning reference signal resource.

Optionally, when the value of the activation indication field is the third value and the sidelink positioning reference signal resource is in an inactive state, the activation indication field indicates to activate the sidelink positioning reference signal resource.

When the value of the activation indication field is the fourth value and the sidelink positioning reference signal resource is in an activated state, the activation indication field indicates to deactivate the sidelink positioning reference signal resource. The third value is different from the fourth value.

In other words, the value of the 2-bit activation indication field indicates to activate or deactivate the sidelink positioning reference signal resource, and the sidelink positioning reference signal resource is determined based on the first field in the downlink control information, so that the terminal device can activate or deactivate the sidelink positioning reference signal resource based on the value of the 2-bit activation indication field. In this way, semi-persistent scheduling of the sidelink positioning reference signal resource can be implemented. When activation or deactivation is indicated, the third value and the fourth value in values of the 2 bits are used, and another value may indicate another function, so that the values of the 2 bits can indicate a plurality of functions, thereby reducing signaling overheads.

In still another possible implementation, the second field is a time domain scheduling field.

When a value of the time domain scheduling field is a fifth value, the time domain scheduling field indicates to activate the sidelink positioning reference signal resource; or when a value of the time domain scheduling field is a sixth value, the time domain scheduling field indicates to deactivate the sidelink positioning reference signal resource.

Optionally, when the value of the time domain scheduling field is the fifth value and the sidelink positioning reference signal resource is in an inactive state, the time domain scheduling field indicates to activate the sidelink positioning reference signal resource.

When the value of the time domain scheduling field is the sixth value and the sidelink positioning reference signal resource is in an activated state, the time domain scheduling field indicates to deactivate the sidelink positioning reference signal resource. The fifth value is different from the sixth value.

Generally, the time domain scheduling field indicates time domain information, for example, slot information, of the sidelink positioning reference signal resource. In this application, the time domain scheduling field further indicates to activate or deactivate the sidelink positioning reference signal resource, and the sidelink positioning reference signal resource is determined based on the first field in the downlink control information. In other words, the value of the time domain scheduling field is reused to indicate to activate or deactivate the sidelink positioning reference signal resource, so that the terminal device can activate the sidelink positioning reference signal resource based on the value of the time domain scheduling field being the fifth value, or deactivate the sidelink positioning reference signal resource based on the value of the time domain scheduling field being the sixth value. In this way, semi-persistent scheduling of the sidelink positioning reference signal resource can be implemented, and signaling overheads can be reduced. There is no need to add an additional field to the downlink control information to indicate activation or deactivation, so that modifications to the downlink control information are small.

Optionally, the method further includes: sending a first parameter and/or a second parameter to the terminal device, where the first parameter indicates the fifth value, and the second parameter indicates the sixth value. In other words, the network device configures the first parameter and/or the second parameter for the terminal device. The first parameter indicates to activate the sidelink positioning reference signal resource when the value of the time domain scheduling field is the fifth value; and the second parameter indicates to deactivate the sidelink positioning reference signal resource when the value of the time domain scheduling field is the sixth value. The network device configures the first parameter and/or the second parameter for the terminal device, so that the terminal device can determine which value of the time domain scheduling field can be used to activate the sidelink positioning reference signal resource and/or which value of the time domain scheduling field can be used to deactivate the sidelink positioning reference signal resource. It can be learned that the network device may flexibly configure the first parameter and/or the second parameter.

Optionally, the fifth value and the sixth value are predefined, for example, predefined in a protocol. In other words, when the value of the time domain scheduling field is fixed to the fifth value, the time domain scheduling field indicates to activate the sidelink positioning reference signal resource; or when the value of the time domain scheduling field is fixed to the sixth value, the time domain scheduling field indicates to deactivate the sidelink positioning reference signal resource. Compared with a case in which the network device configures the first parameter and/or the second parameter for the terminal device, signaling and radio resources can be saved in this case.

In still another possible implementation, the second field is a resource indication field.

When a value of the resource indication field is a seventh value or a first group of values, the resource indication field indicates to activate the sidelink positioning reference signal resource; or when a value of the resource indication field is an eighth value or a second group of values, the resource indication field indicates to deactivate the sidelink positioning reference signal resource.

Optionally, when the value of the resource indication field is the seventh value or the first group of values and the sidelink positioning reference signal resource is in an inactive state, the resource indication field indicates to activate the sidelink positioning reference signal resource.

When the value of the resource indication field is the eighth value or the second group of values and the sidelink positioning reference signal resource is in an activated state, the resource indication field indicates to deactivate the sidelink positioning reference signal resource. The seventh value is different from the eighth value, the first group of values includes one or more values, and the second group of values includes one or more values.

Generally, the resource indication field indicates an index of a scheduled sidelink positioning reference signal resource, for example, an index of a semi-persistently scheduled sidelink positioning reference signal resource. In this application, the resource indication field further indicates to activate or deactivate the sidelink positioning reference signal resource. In other words, the value of the resource indication field is reused to indicate to activate or deactivate the sidelink positioning reference signal resource, so that the terminal device can activate or deactivate the sidelink positioning reference signal resource based on the value of the resource indication field. In this way, semi-persistent scheduling of the sidelink positioning reference signal resource can be implemented, and signaling overheads can be reduced. There is no need to add an additional field to the downlink control information to indicate activation or deactivation, so that modifications to the downlink control information are small.

Optionally, when an i^{th} sidelink positioning reference signal resource index indicated by the resource indication field is a ninth value, the resource indication field specifically indicates to activate the sidelink positioning reference signal resource; or when an i^{th} sidelink positioning reference signal resource index indicated by the resource indication field is a tenth value, the resource indication field specifically indicates to deactivate the sidelink positioning reference signal resource. i is an integer greater than 1, a third group of values includes one or more values, and a fourth group of values includes one or more values. It may be understood that when a plurality of sidelink positioning reference signal resource are semi-persistently scheduled, the i^{th} sidelink positioning reference signal resource index is the same as a 1^{st} sidelink positioning reference signal resource index by default. However, the i^{th} sidelink positioning reference signal resource index indicated by the resource indication field indicates to activate or deactivate the sidelink positioning reference signal resource.

Optionally, the method further includes: sending a third parameter and/or a fourth parameter to the terminal device, where the third parameter indicates the ninth value or the third group of values, and the fourth parameter indicates the tenth value or the third group of values. In other words, the network device configures the third parameter and/or the fourth parameter for the terminal device. The third parameter indicates to activate the sidelink positioning reference signal resource when the value of the resource indication field is the ninth value or the third group of values; and the fourth parameter indicates to deactivate the sidelink positioning reference signal resource when the value of the resource indication field is the tenth value or the fourth group of values. The network device configures the third parameter and/or the fourth parameter for the terminal device, so that the terminal device can determine which value of the resource indication field can be used to activate the sidelink positioning reference signal resource and/or which value of the resource indication field can be used to deactivate the sidelink positioning reference signal resource. It can be learned that the network device may flexibly configure the third parameter and/or the fourth parameter.

Optionally, the ninth value and the tenth value are predefined, for example, predefined in a protocol. Alternatively, the third group of values and the fourth group of values are predefined. In other words, when the value of the resource indication field is fixed to the ninth value or the third group of values, the resource indication field indicates to activate the sidelink positioning reference signal resource; or when the value of the resource indication field is fixed to the tenth value or the fourth group of values, the resource indication field indicates to deactivate the sidelink positioning reference signal resource. Compared with a case in which the network device configures the third parameter and/or the fourth parameter for the terminal device, signaling and radio resources can be saved in this case.

In a possible implementation, the first field is a resource indication field. The resource indication field indicates an index of the sidelink positioning reference signal resource, in other words, indicates the sidelink positioning reference signal resource, so that the terminal device can determine the sidelink positioning reference signal resource based on a value of the resource indication field.

Optionally, the downlink control information further includes a configuration index field, the configuration index field indicates a configuration index, and a transmission period and/or a maximum quantity of transmissions of the sidelink positioning reference signal resource may be determined based on the configuration index. The configuration index field indicates the configuration index, and semi-persistent configuration information may be determined based on the configuration index. The semi-persistent configuration information includes the transmission period and/or the maximum quantity of transmissions.

Optionally, the method further includes: sending first RRC signaling to the terminal device, where the first RRC signaling is for configuring a transmission period and/or a maximum quantity of transmissions of the sidelink positioning reference signal resource. It may be understood that the first RRC signaling is for configuring semi-persistent configuration information, and the semi-persistent configuration information includes the transmission period and/or the maximum quantity of transmissions.

In another possible implementation, the first field is a configuration index field, the configuration index field indicates a configuration index, and the configuration index is associated with the sidelink positioning reference signal resource. In other words, the sidelink positioning reference signal resource associated with the configuration index, in other words, a semi-persistently scheduled sidelink positioning reference signal resource, may be determined based on the configuration index field. Compared with a case in which the sidelink positioning reference signal resource is determined based on the resource indication field in the downlink control information, in a case in which the sidelink positioning reference signal resource is determined based on the configuration index in the downlink control information, a bit length of the downlink control information is shorter.

Optionally, the configuration index field is further for determining a transmission period and/or a maximum quantity of transmissions of the sidelink positioning reference signal resource. The terminal device may further determine, based on the configuration index indicated by the configuration index field, the transmission period and/or the maximum quantity of transmissions of the sidelink positioning reference signal resource.

Optionally, the method further includes: sending second RRC signaling to the terminal device, where the second RRC signaling is for configuring at least one of a transmission period, a maximum quantity of transmissions, or a sidelink positioning reference signal resource associated with the configuration index. It may be understood that the second RRC signaling is for configuring semi-persistent configuration information, and the semi-persistent configuration information includes at least one of the transmission period, the maximum quantity of transmissions, the configuration index, or the sidelink positioning reference signal resource associated with the configuration index.

According to a third aspect, an embodiment of this application provides a communication apparatus. The communication apparatus may be a terminal device, an apparatus in the terminal device, or an apparatus that can be used in a matching manner with the terminal device. The communication apparatus may alternatively be a chip system. The communication apparatus may perform the method according to the first aspect. A function of the communication apparatus may be implemented by hardware, or may be implemented by hardware executing corresponding software. The hardware or the software includes one or more units or modules corresponding to the foregoing functions. The unit or module may be software and/or hardware. For operations performed by the communication apparatus and beneficial effects, refer to the method and the beneficial effects in the first aspect.

According to a fourth aspect, an embodiment of this application provides a communication apparatus. The communication apparatus may be a network device, an apparatus in the network device, or an apparatus that can be used in a matching manner with the network device. The communication apparatus may alternatively be a chip system. The communication apparatus may perform the method according to the second aspect. A function of the communication apparatus may be implemented by hardware, or may be implemented by hardware executing corresponding software. The hardware or the software includes one or more units or modules corresponding to the foregoing functions. The unit or module may be software and/or hardware. For operations performed by the communication apparatus and beneficial effect, refer to the method and the beneficial effect in the second aspect.

According to a fifth aspect, an embodiment of this application provides a communication apparatus. The communication apparatus includes a processor, and the processor is configured to perform the method according to the first aspect or the method according to the second aspect.

According to a sixth aspect, an embodiment of this application provides a communication apparatus. The communication apparatus includes a processor, the processor is coupled to a memory, the memory is configured to store a program or instructions, and when the program or the instructions are executed by the processor, the communication apparatus is caused to perform the method according to the first aspect or the second aspect.

In a possible implementation, the communication apparatus further includes the memory. Optionally, the processor is integrated with the memory. Optionally, the memory and the processor are independently disposed.

According to a seventh aspect, an embodiment of this application provides a communication apparatus. The communication apparatus includes a processor and an interface circuit. The interface circuit is configured to receive a signal from a communication apparatus other than the communication apparatus and transmit the signal to the processor, or send a signal from the processor to a communication apparatus other than the communication apparatus. The processor is configured to implement the method according to the first aspect or the second aspect by using a logic circuit or by executing code instructions.

According to an eighth aspect, an embodiment of this application provides a computer-readable storage medium. The computer-readable storage medium stores a computer program or instructions, and when the computer program or the instructions are executed by a communication apparatus, the method according to the first aspect or the second aspect is implemented.

According to a ninth aspect, an embodiment of this application provides a computer program product including instructions. When a communication apparatus reads and executes the instructions, the communication apparatus is caused to perform the method according to any one of the first aspect or the second aspect.

### BRIEF DESCRIPTION OF DRAWINGS

FIG. 1 is a diagram of an SL resource pool;
FIG. 2 is a diagram of a network architecture to which an embodiment of this application is applied;
FIG. 3 is a diagram of another network architecture to which an embodiment of this application is applied;
FIG. 4 is a schematic flowchart of an SL PRS resource scheduling method according to an embodiment of this application;
FIG. 5 is a diagram of data block transmission;
FIG. 6 is a diagram of SL PRS transmission;
FIG. 7 is a configuration diagram of RRC signaling;
FIG. 8 is a diagram of a structure of a communication apparatus according to an embodiment of this application; and
FIG. 9 is a diagram of a structure of another communication apparatus according to an embodiment of this application.

### DESCRIPTION OF EMBODIMENTS

In this application, terms such as "first" and "second" are used for distinguishing between same items or similar items with basically same roles and functions. A person skilled in the art may understand that the terms such as "first" and "second" do not limit a quantity or an execution sequence, and the terms such as "first" and "second" do not indicate a definite difference. A term "and/or" describes only an association relationship between associated objects and indicates that there may be three relationships. For example, A and/or B may represent the following three cases: Only A exists, both A and B exist, and only B exists. The character "/" generally indicates an "or" relationship between the associated objects.

It should be understood that, in this application, "at least one" means one or more, and "a plurality of" means two or more. In addition, "equal to" in this application may be used together with "greater than", or may be used together with "less than". When "equal to" and "greater than" are used together, a technical solution corresponding to "greater than" is used; and when "equal to" and "less than" are used together, a technical solution corresponding to "less than" is used.

In this application, "sending information to ... (for example, a terminal device)" may be understood as that a destination end of the information is the terminal device, and may include directly or indirectly sending the information to the terminal device. "Receiving information from ... (for example, a terminal device)" or "receiving information of ... (for example, a terminal device)" may be understood as that a source end of the information is the terminal device, and may include directly or indirectly receiving information from the terminal device. Necessary processing, for example, a format change, may be performed on the information between the source end and the destination end for information sending. However, the destination end can understand valid information from the source end. A similar expression in this application may be understood similarly, and details are not described herein again.

The following first describes related names or terms in this application, to facilitate understanding by a person skilled in the art.

### 1. Terminal device

The terminal device may also be referred to as user equipment (user equipment, UE), a mobile station (mobile station, MS), a mobile terminal (mobile terminal, MT), or the like, or is a device that is configured to provide voice or data connectivity for a user, or may be an internet of things device. For example, the terminal device includes a handheld device, a vehicle-mounted device, or the like that has a wireless connection function. Currently, the terminal device may be a mobile phone, a tablet computer, a notebook computer, a palmtop computer, a mobile internet device (mobile internet device, MID), a wearable device (for example, a smart watch, a smart band, or a pedometer), a vehicle-mounted device (for example, a car, a bicycle, an electric vehicle, an airplane, a ship, a train, or a high-speed train), a satellite terminal, a virtual reality (virtual reality, VR) device, an augmented reality (augmented reality, AR) device, a smart point of sale (point of sale, POS) machine, customer-premises equipment (customer-premises equipment, CPE), a wireless terminal in industrial control, a smart home device (for example, a refrigerator, a television, an air conditioner, or an electricity meter), a smart robot, a robot arm, a workshop device, a wireless terminal in self-driving, a wireless terminal in telemedicine, a wireless terminal in a smart grid (smart grid), a wireless terminal in transportation safety, a wireless terminal in a smart city, a wireless terminal in a smart home, a flight device (for example, a smart robot, a hot air balloon, an uncrewed aerial vehicle, or an airplane), or the like. The terminal device may alternatively be another device having a function of a terminal. For example, the terminal device may alternatively be a device that functions as a terminal in D2D communication.

### 2. Network device

The network device is a node in a radio access network (radio access network, RAN), and may also be referred to as an access network device, or may also be referred to as a RAN node (or device). The network device is configured to help a terminal device implement radio access. In a possible scenario, the network device may be a base station (base station), an evolved NodeB (evolved NodeB, eNodeB), a transmitting and receiving point (transmitting and receiving point, TRP), a transmitting point (transmitting point, TP), a next generation NodeB (next generation NodeB, gNB), a next generation base station in a 6G system, a base station in a future mobile communication system, a satellite, an integrated access and backhaul (integrated access and backhaul, IAB) node, or an access network device that is in non-terrestrial communication network (non-terrestrial network, NTN) communication system of a mobile switching center and that may be deployed on a high-altitude platform, a satellite, or the like. The network device may be a macro base station, a micro base station, an indoor base station, a relay node, a donor node, or a radio controller in a cloud radio access network (cloud radio access network, CRAN) scenario. The network device may alternatively be a device having a base station function in device to device (device to device, D2D) communication, vehicle to everything communication, uncrewed aerial vehicle communication, or machine communication. Optionally, the network device may alternatively be a server, a wearable device, a vehicle, a vehicle-mounted device, or the like. For example, a network device in a vehicle to everything (vehicle to everything, V2X) technology may be a roadside unit (roadside unit, RSU).

All or a part of functions of the network device in this application may alternatively be implemented by using a software function running on hardware, or may be implemented by using an instantiated virtualization function on a platform (for example, a cloud platform). The network device in this application may alternatively be a logical node, a logical module, or software that can implement all or a part of functions of the network device.

In another possible scenario, a plurality of network devices collaborate to assist a terminal in implementing radio access, and different network devices respectively implement a part of functions of the base station. For example, the network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the network device may be a CU node, a DU node, or a device including a CU node and a DU node. In addition, the CU may be classified as a network device in an access network RAN, or the CU may be classified as a network device in a core network CN. This is not limited herein.

In different systems, the CU (or the CU-CP and the CU-UP), the DU, or the RU may also have different names, but a person skilled in the art may understand meanings thereof. For example, in an open access network (open RAN, O-RAN or ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of the software module and the hardware module.

### 3. Sidelink positioning reference signal

A positioning reference signal (positioning reference signal, PRS) is a known signal provided by a transmit end to a receive end for positioning. In embodiments of this application, a sidelink positioning reference signal is used to describe a reference signal that is transmitted between terminal devices or that is transmitted between a terminal device and a roadside unit (roadside unit, RSU) and that is for implementing a positioning function. The positioning function may be implemented between terminal devices by transmitting a sidelink positioning reference signal. A full name of the sidelink positioning reference signal is a sidelink positioning reference signal (sidelink positioning reference signal, SL PRS), and the SL PRS may also be described as an SL-PRS, an SPRS, or the like. It should be noted that, with evolution of a standard, another name may be used for a positioning reference signal between terminal devices. For ease of description, in embodiments of this application, an SL PRS is used to describe a sidelink positioning reference signal, and an SL PRS resource is used to describe a sidelink positioning reference signal resource. The SL PRS resource is for SL PRS transmission.

### 4. Resource pool (resource pool)

In a broad sense, a resource pool is defined as a set of resources. In this application, the resource pool is a sidelink (sidelink, SL) resource pool, and the SL resource pool may be understood as a set of SL resources.

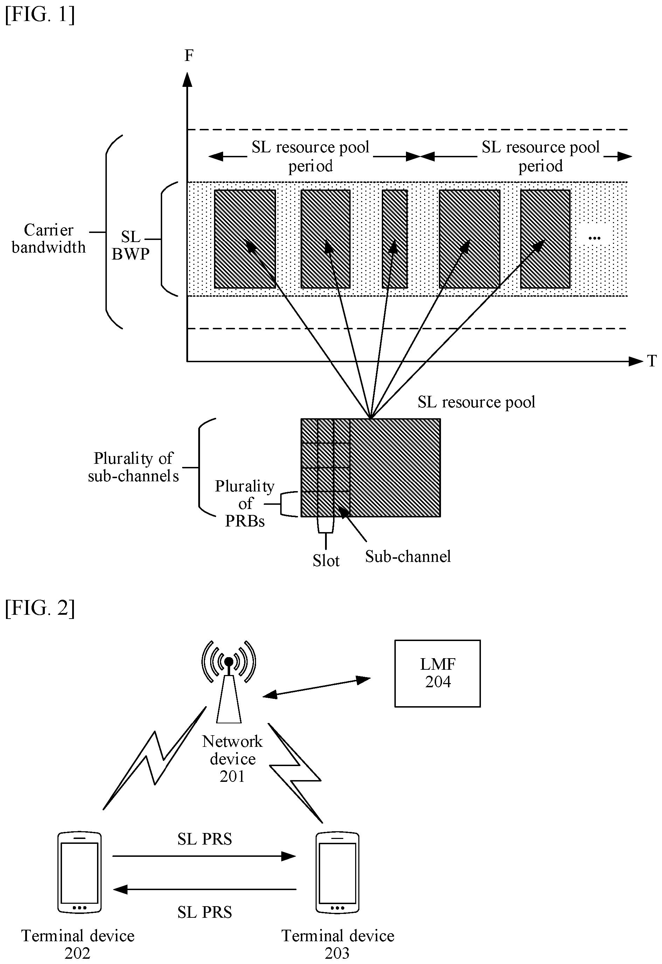

For example, refer to a diagram of an SL resource pool shown in FIG. 1. In FIG. 1, in a carrier bandwidth (carrier bandwidth), a bandwidth part (bandwidth part, BWP) is allocated for SL use, and the BWP allocated for SL use may be referred to as an SL BWP. A time-frequency resource corresponding to the SL BWP may be further divided into a plurality of SL resource pools. An independent channel, for example, a physical sidelink control channel (physical sidelink control channel, PSCCH) or a physical sidelink shared channel (physical sidelink shared channel, PSSCH), may be configured within each SL resource pool. Each SL resource pool performs independent sensing and resource allocation. A frequency domain resource in an SL resource pool may be further divided into sub-channels with a finer granularity. Resource allocation and data transmission are performed on a sub-channel basis. For example, one sub-channel or a plurality of consecutive sub-channels are allocated, or data transmission is performed on one sub-channel or a plurality of consecutive sub-channels. One sub-channel may include a plurality of physical resource blocks (physical resource block, PRB). A sub-channel may also be used to indicate specific frequency domain location information.

Embodiments of this application relate to an SL PRS dedicated resource pool. The SL PRS dedicated resource pool may be the foregoing SL resource pool. However, a resource in the SL resource pool is for transmitting an SL PRS and a PSCCH, and is not for transmitting a PSSCH.

For an SL resource, a scheduling manner of the SL resource may be a dynamic scheduling manner, a semi-persistent scheduling manner, or a periodic scheduling manner. The dynamic scheduling manner is implemented by using downlink control information (downlink control information, DCI) indication. The periodic scheduling manner is implemented by using RRC signaling pre-configuration. The semi-persistent scheduling manner is implemented by using RRC signaling pre-configuration in combination with DCI indication. Although the SL resource supports the semi-persistent scheduling manner, in the SL PRS dedicated resource pool, how to implement semi-persistent scheduling of an SL PRS resource is currently a research hotspot. In addition, currently, it is not clear whether semi-persistent scheduling of an SL resource is applicable to an SL PRS resource.

In view of this, embodiments of this application provide an SL PRS resource scheduling manner and a communication apparatus. The scheduling manner refers to a semi-persistent scheduling manner, and specifically to a semi-persistent scheduling manner in an SL PRS dedicated resource pool. In embodiments of this application, it is specified in DCI which field indicates to activate or deactivate a semi-persistently scheduled SL PRS resource, so that semi-persistent scheduling of the SL PRS resource can be implemented in the SL PRS dedicated resource pool, to reduce signaling overheads.

The following describes a network architecture to which embodiments of this application are applied.

FIG. 2 is a diagram of a network architecture to which an embodiment of this application is applied. The network architecture shown in FIG. 2 may include a network device 201, a terminal device 202, and a terminal device 203. A device form and a quantity of devices shown in FIG. 2 are used as an example, and do not constitute a limitation on embodiments of this application. In FIG. 2, an example in which the terminal device 202 and the terminal device 203 are both within a coverage area of the network device 201 is used. Alternatively, the terminal device 202 may be within the coverage area of the network device 201, and the terminal device 203 is not within the coverage area of the network device 201. Alternatively, the terminal device 203 is within the coverage area of the network device 201, and the terminal device 202 is not within the coverage area of the network device 201. In other words, at least one terminal device is within the coverage area of the network device 201. A terminal device within the coverage area of the network device 201 may receive signaling such as DCI and/or RRC signaling.

For example, under control of the network device 201, the terminal device 202 may send an SL PRS to the terminal device 203. The terminal device 203 receives the SL PRS, and may implement ranging, angle measurement, or the like by measuring the SL PRS, to obtain a measurement result. The terminal device 203 may send the measurement result to the network device 201.

For example, under control of the network device 201, the terminal device 203 may send an SL PRS to the terminal device 202. The terminal device 202 receives the SL PRS, and may implement ranging, angle measurement, or the like by measuring the SL PRS, to obtain a measurement result. The terminal device 202 may send the measurement result to the network device 201.

Optionally, the network architecture shown in FIG. 2 may further include a location management function (location management function, LMF) 204. The LMF is a network element, a module, or a component in a new radio (new radio, NR) core network, and is mainly configured to provide a positioning function. The network device 201 may send the measurement result received by the network device 201 to the LMF 204, and the LMF 204 may analyze the measurement result. The network device 201 may directly feed back the measurement result to the LMF 204, or may feed back the measurement result to the LMF 204 through another core network element.

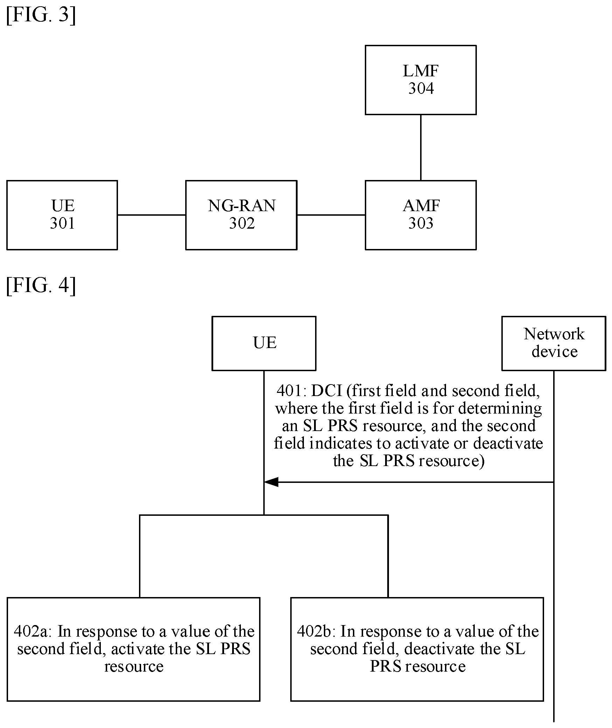

FIG. 3 is a diagram of another network architecture to which an embodiment of this application is applied. The network architecture shown in FIG. 3 may include UE 301, a next generation-radio access network (next generation-radio access network, NG-RAN) 302, an access and mobility management function (access and mobility management function, AMF) 303, and an LMF 304. The network architecture shown in FIG. 3 may be understood as an NG-RAN-based positioning network architecture.

The NG-RAN 302 may include a 4G station (namely, an ng-eNB) and a 5G station (namely, a gNB) of a 5G core network. The ng-eNB is a device or an apparatus that is deployed in a radio access network and that meets a 4G standard and provides a wireless communication function for UE. The ng-eNB may be a base station, an access point, or the like in various forms. The ng-eNB may alternatively be a TRP. The gNB is a device or an apparatus that is deployed in the radio access network and that meets a 5G standard and provides a wireless communication function for UE. The gNB may be a base station, an access point, or the like in various forms. The gNB may alternatively be a TRP, a transmission measurement function (transmission measurement function, TMF), or the like.

The AMF 303 is a network element, a module, or a component in an NR core network, and is mainly configured to provide an access management function.

The AMF 303 receives a positioning service request of the UE 301. The positioning service request may be sent by another network element in the NR core network, or may be sent by a data network. The AMF 303 sends the received positioning service request to the LMF 304. The LMF 304 processes the received positioning service request, and initiates a positioning procedure related to the UE 301. The NG-RAN 302 is responsible for sending an SL PRS to the UE 301 and/or receiving an SL PRS from the UE 301, obtaining a measurement result based on the SL PRS, and further sending the measurement result to the LMF 304 through the AMF 303.

Based on the network architecture shown in FIG. 2 or FIG. 3, the following describes in detail an SL PRS resource scheduling method provided in embodiments of this application. For ease of description, an example in which a terminal device is UE is used.

FIG. 4 is a schematic flowchart of an SL PRS resource scheduling method according to an embodiment of this application. The method may include but is not limited to the following steps.

401: A network device sends DCI to UE. Correspondingly, the UE receives the DCI from the network device. The DCI includes a first field and a second field, the first field is for determining an SL PRS resource, and the second field indicates to activate or deactivate the SL PRS resource.

It may be understood that, the first field is for determining the SL PRS resource, to be specific, a preconfigured SL PRS resource. The preconfigured SL PRS resource refers to an SL PRS resource configured by the network device for the UE by using RRC signaling. The second field indicates to activate or deactivate the SL PRS resource.

A value of the second field specifically indicates to activate the SL PRS resource when the SL PRS resource is in an inactive state; or indicates to deactivate the SL PRS resource when the SL PRS resource is in an activated state.

Optionally, the first field may be a resource indication field or a configuration index field. The resource indication field may be an SL PRS resource indication field, for example, may be an SL PRS resource indicator field in the DCI. The field indicates an index of the SL PRS resource. The configuration index field may be, for example, a configuration index field in the DCI. The field indicates a configuration index, to be specific, a configuration index of semi-persistent configuration information. The semi-persistent configuration information is configured by using RRC signaling. The configuration index may be associated with the SL PRS resource, and an association relationship may be configured in the semi-persistent configuration information. "Semi-persistent" may also be described as "semi-periodic", "semi-continuous", "semi-persistence", or the like, and indicates that, after activation is performed, periodic transmission may be performed until the transmission stops. A stop condition includes: The network device delivers a deactivation indication; or a maximum quantity of transmissions is reached; or a specific rule is satisfied. For example, transmission stops according to a preset probability.

Optionally, the second field may be an activation indication field, a time domain scheduling field, or a resource indication field. The activation indication field may be a newly added field in the DCI, and the field indicates to activate or deactivate the SL PRS resource determined based on the first field. The activation indication field may be, for example, an SL PRS activation (SL PRS activation) field. The time domain scheduling field may be a time domain resource scheduling field, for example, may be a time resource assignment field in the DCI. The field usually indicates an index of a scheduled SL PRS resource. In this embodiment of this application, some values of the field are reused to indicate to activate or deactivate the SL PRS resource determined based on the first field. The resource indication field may be an SL PRS resource indication field, for example, may be an SL PRS resource indication field in the DCI. The field usually indicates time domain information of the SL PRS resource. In this embodiment of this application, some values of the field are reused to indicate to activate or deactivate the SL PRS resource determined based on the first field. The time domain information of the SL PRS resource may be slot information of the SL PRS resource, and indicates one or more time units, for example, one or more slots. For example, the SL PRS resource occupies three slots, and the time domain information of the SL PRS resource indicates indexes of the three slots.

There are two optional fields for the first field, and three optional fields for the second field, which are merely used as examples, and do not constitute a limitation on embodiments of this application. Based on the two optional fields for the first field and the three optional fields for the second field, a plurality of combinations may be obtained. Details are specifically described in the following Manner 1 to Manner 7. Details are not described herein.

402a: In response to a value of the second field, the UE activates the SL PRS resource.

The UE receives the DCI, parses the DCI to obtain the first field and the second field, and determines the SL PRS resource based on the first field. Optionally, the UE determines that the SL PRS resource is in an activated state or an inactive state. For example, the first field is an SL PRS resource indication field. The SL PRS resource is determined based on an index of the SL PRS resource indicated by the field, and whether the SL PRS resource is used for SL PRS and/or PSCCH transmission is monitored. If the SL PRS resource is not used for SL PRS and/or PSCCH transmission, the SL PRS resource is in an inactive state; or if the SL PRS resource is being used for SL PRS and/or PSCCH transmission, the SL PRS resource is in an activated state.

The UE may determine, based on the value of the second field, to activate the SL PRS resource. Optionally, when determining that the SL PRS resource is in an inactive state, the UE may determine, based on the value of the second field, to activate the SL PRS resource. After activating the SL PRS resource, the UE may transmit an SL PRS and/or a PSCCH by using the SL PRS resource.

402b: In response to a value of the second field, the UE deactivates the SL PRS resource.

The UE may determine, based on the value of the second field, to deactivate the SL PRS resource. Optionally, when determining that the SL PRS resource is in an activated state, the UE may determine, based on the value of the second field, to deactivate the SL PRS resource. After deactivating the SL PRS resource, the UE may stop transmitting an SL PRS and/or a PSCCH by using the SL PRS resource.

In the embodiment shown in FIG. 4, with reference to the first field and the second field in the DCI, the UE may activate or deactivate a semi-persistent SL PRS resource, to implement semi-persistent scheduling of the SL PRS resource, thereby reducing signaling overheads.

Optionally, before sending the DCI to the UE, the network device may send RRC signaling to the UE.

In an implementation, the network device sends first RRC signaling to the UE, where the first RRC signaling may include one or more of a configuration index, a transmission period, and a maximum quantity of transmissions. The configuration index indicates an index of the semi-persistent configuration information. The transmission period indicates a transmission period of an SL PRS resource, and is in a unit of millisecond (ms). For example, a minimum period is 100 ms, and a maximum period is 1,000 ms. With development of the standard, the maximum period may be further increased. The maximum quantity of transmissions indicates a maximum quantity of transmissions of an SL PRS resource associated with the semi-persistent configuration information.

For example, the semi-persistent configuration information configured by using the first RRC signaling may be shown as follows:

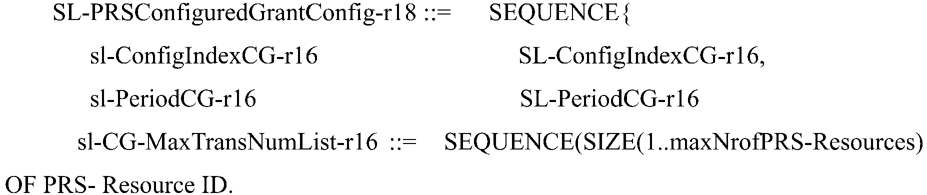

sl-ConfigIndexCG represents the configuration index, sl-PeriodCG represents the transmission period, and sl-CG-MaxTransNumList represents the maximum quantity of transmissions.

In another implementation, the network device sends second RRC signaling to the UE, where the second RRC signaling may include one or more of a configuration index, a transmission period, a maximum quantity of transmissions, and an SL PRS resource associated with the configuration index. The configuration index indicates an index of the semi-persistent configuration information. The transmission period indicates a transmission period of an SL PRS resource, and is in a unit of millisecond (ms). For example, a minimum period is 100 ms, and a maximum period is 1,000 ms. With development of the standard, the maximum period may be further increased. The maximum quantity of transmissions indicates a maximum quantity of transmissions of an SL PRS resource associated with the semi-persistent configuration information. The SL PRS resource associated with the configuration index may also be described as the SL PRS resource associated with the semi-persistent configuration information.

For example, the semi-persistent configuration information configured by using the second RRC signaling may be shown as follows:

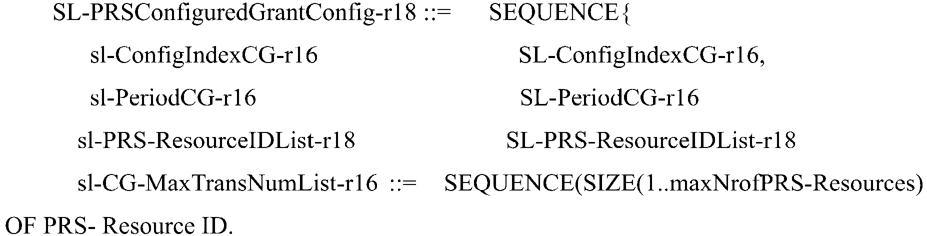

sl-ConfigIndexCG represents the configuration index, sl-PeriodCG represents the transmission period, sl-CG-MaxTransNumList represents the maximum quantity of transmissions, sl-PRS-ResourceIDList represents an SL PRS resource list associated with the configuration index, and the SL PRS resource list may include one or more SL PRS resources.

It can be learned by comparing the first RRC signaling with the second RRC signaling that additional sl-PRS-ResourceIDList is configured in the second RRC signaling compared with the second RRC signaling, in other words, the SL PRS resource associated with the configuration index is additionally configured. When the network device sends the first RRC signaling, the DCI sent by the network device to the UE needs to include the resource indication field. When the network device sends the second RRC signaling, the DCI sent by the network device to the UE may include the resource indication field, or may not need to include the resource indication field. When the DCI does not include the resource indication field, a bit length of the DCI is shortened.

For example, the DCI may include one or more of the following fields:
- a resource pool index field (Resource pool index), where a field length of the field is a quantity of bits obtained by rounding up log₂*I*; *I* is a total quantity of resource pools configured by using a higher layer parameter, or a total quantity of resource pools that are configured by using a higher layer parameter and that are for SL PRS transmission, or a total quantity of SL PSR-dedicated resource pools configured by using a higher layer parameter; and the field indicates a resource pool to which a currently scheduled SL PRS resource belongs;
- a time gap field (Time Gap), where a field length of the field is 3 bits, and the field indicates a slot offset between transmission time of the SL PRS resource and a slot in which the DCI is received; and
- SCI format1-B fields according to clause 8.3.1.2:
- a time domain scheduling field (Time resource assignment), where the field indicates slot information of the currently scheduled SL PRS resource;
- a resource indication field (SL PRS resource indication), where the field indicates an index of the currently scheduled SL PRS resource;
- a configuration index field (Configuration index), where the field indicates a configuration index in RRC signaling, for example, the configuration index in the first RRC signaling or the configuration index in the second RRC signaling; and
- an activation indication field (SL PRS activation), where the field indicates to activate or deactivate the SL PRS resource.

Based on the two optional fields for the first field and the three optional fields for the second field, a plurality of combinations may be obtained.

Manner 1: The first field is a resource indication field, and the second field is an activation indication field.

The resource indication field indicates a currently scheduled SL PRS resource, and the activation indication field indicates to activate or deactivate the SL PRS resource. The resource indication field indicates one or more SL PRS resources, and specifically, indicates indexes of the one or more SL PRS resources. The resource indication field may also be referred to as an SL PRS resource identifier (SL PRS resource ID) field or have another name. This is not limited herein.

Optionally, a field length of the activation indication field is 1 bit, and a value of the 1 bit indicates to activate or deactivate the SL PRS resource. When the value of the 1 bit is a first value, if the SL PRS resource is in an inactive state, the activation indication field indicates to activate the SL PRS resource; or when the value of the 1 bit is a second value, if the SL PRS resource is in an activated state, the activation indication field indicates to deactivate the SL PRS resource. The first value may be the same as the second value. For example, when the value of the 1 bit is 1, if the SL PRS resource is in an inactive state, the activation indication field indicates to activate the SL PRS resource; or when the value of the 1 bit is 1, if the SL PRS resource is in an activated state, the activation indication field indicates to deactivate the SL PRS resource. The first value may be different from the second value. For example, when the value of the 1 bit is 1, if the SL PRS resource is in an inactive state, the activation indication field indicates to activate the SL PRS resource; or when the value of the 1 bit is 0, if the SL PRS resource is in an activated state, the activation indication field indicates to deactivate the SL PRS resource.

Optionally, a field length of the activation indication field is 2 bits, and a value of the 2 bits indicates to activate or deactivate the SL PRS resource. When the value of the 2 bits is a third value, the activation indication field indicates to activate the SL PRS resource; or when the value of the 2 bits is a fourth value, the activation indication field indicates to deactivate the SL PRS resource. Optionally, when the value of the 2 bits is the third value, if the SL PRS resource is in an inactive state, the activation indication field indicates to activate the SL PRS resource; or when the value of the 2 bits is the fourth value, if the SL PRS resource is in an activated state, the activation indication field indicates to deactivate the SL PRS resource. The third value may be different from the fourth value. For example, when the value of the 2 bits is 01, the activation indication field indicates to activate the SL PRS resource; or when the value of the 2 bits is 10, the activation indication field indicates to deactivate the SL PRS resource. Another value of the 2 bits may indicate another function, so that signaling overheads of the DCI can be reduced.

The DCI may further include a configuration index field, and a transmission period and/or a maximum quantity of transmissions of the SL PRS resource may be determined based on the configuration index field, so that the UE periodically activates or deactivates the SL PRS resource, and/or activates or deactivates the SL PRS resource based on the maximum quantity of transmissions.

Manner 2: The first field is a configuration index field, and the second field is an activation indication field.

The configuration index field indicates a configuration index in RRC signaling, the configuration index is associated with an SL PRS resource, and one configuration index may be associated with one SL PRS resource. The activation indication field indicates to activate or deactivate the associated SL PRS resource.

Optionally, a field length of the activation indication field is 1 bit, and a value of the 1 bit indicates to activate or deactivate the SL PRS resource. When the value of the 1 bit is a first value, if the SL PRS resource is in an inactive state, the activation indication field indicates to activate the SL PRS resource; or when the value of the 1 bit is a second value, if the SL PRS resource is in an activated state, the activation indication field indicates to deactivate the SL PRS resource. The first value may be the same as the second value. For example, when the value of the 1 bit is 1, if the SL PRS resource is in an inactive state, the activation indication field indicates to activate the SL PRS resource; or when the value of the 1 bit is 1, if the SL PRS resource is in an activated state, the activation indication field indicates to deactivate the SL PRS resource. The first value may be different from the second value. For example, when the value of the 1 bit is 1, if the SL PRS resource is in an inactive state, the activation indication field indicates to activate the SL PRS resource; or when the value of the 1 bit is 0, if the SL PRS resource is in an activated state, the activation indication field indicates to deactivate the SL PRS resource.

Optionally, a field length of the activation indication field is 2 bits, and a value of the 2 bits indicates to activate or deactivate the SL PRS resource. When the value of the 2 bits is a third value, the activation indication field indicates to activate the SL PRS resource; or when the value of the 2 bits is a fourth value, the activation indication field indicates to deactivate the SL PRS resource. Optionally, when the value of the 2 bits is the third value, if the SL PRS resource is in an inactive state, the activation indication field indicates to activate the SL PRS resource; or when the value of the 2 bits is the fourth value, if the SL PRS resource is in an activated state, the activation indication field indicates to deactivate the SL PRS resource. The third value may be different from the fourth value. For example, when the value of the 2 bits is 01, the activation indication field indicates to activate the SL PRS resource; or when the value of the 2 bits is 10, the activation indication field indicates to deactivate the SL PRS resource. Another value of the 2 bits may indicate another function, so that signaling overheads of the DCI can be reduced.

The configuration index field further indicates a transmission period and/or a maximum quantity of transmissions of the SL PRS resource, and then the UE may determine the transmission period and/or the maximum quantity of transmissions of the SL PRS resource based on the configuration index field, so that the UE periodically activates or deactivates the SL PRS resource, and/or activates or deactivates the SL PRS resource based on the maximum quantity of transmissions.

Compared with Manner 1, Manner 2 can shorten a bit length of the DCI.

Manner 3: The first field is a resource indication field, and the second field is a time domain scheduling field.

The resource indication field indicates a currently scheduled SL PRS resource, and the time domain scheduling field indicates to activate or deactivate the SL PRS resource. The resource indication field may be, for example, an SL PRS resource indication field or a first SL PRS indicator field. The time domain scheduling field may be, for example, a time resource assignment field or a resource ID indication field. Optionally, the resource indication field is an SL PRS resource indication field, and the time domain scheduling field is a time resource assignment field. Optionally, the resource indication field is a first SL PRS indicator field, and the time domain scheduling field is a resource ID indication field. For the first SL PRS indicator field and the resource ID indication field, refer to specific explanations of the first SL PRS indicator field and the resource ID indication field in Manner 6.

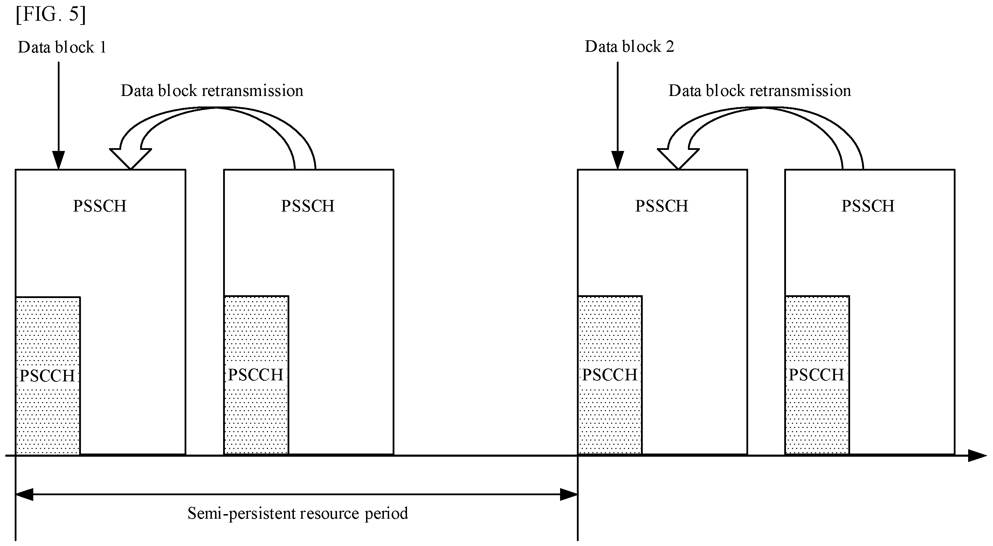

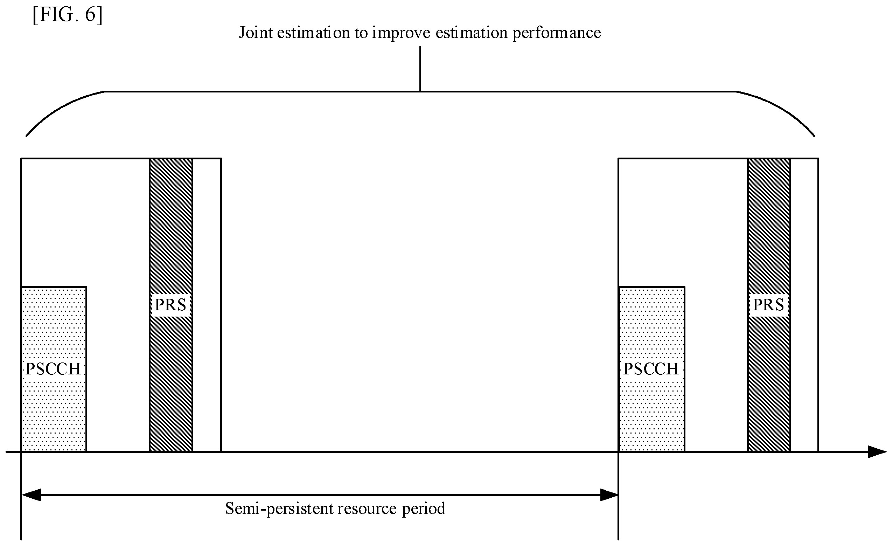

In conventional communication, a transmission success rate may be improved through data retransmission. Different data blocks, rather than a retransmitted part of a data block, are sent in different resource periods. For example, refer to FIG. 5. In FIG. 5, a data block 1 is transmitted in one semi-persistent resource period, the data block 1 is retransmitted in the period, and a data block 2 is transmitted in a next semi-persistent resource period. However, for an SL PRS, the SL PRS may be transmitted once in each SL PRS resource period, because the SL PRS does not need to be retransmitted. Joint estimation may be performed through transmissions in a plurality of SL PRS resource periods to improve measurement accuracy. Therefore, for transmitting the SL PRS once in each SL PRS resource period, there is no need for a time domain scheduling field to indicate a future reserved aperiodic SL PRS resource. For example, refer to FIG. 6. In FIG. 6, an SL PRS is transmitted once in one semi-persistent resource period. Further, a time domain scheduling field may be reused to indicate to activate or deactivate an SL PRS resource.

When a value of the time domain scheduling field is a fifth value, the time domain scheduling field indicates to activate the SL PRS resource; or when a value of the time domain scheduling field is a sixth value, the time domain scheduling field indicates to deactivate the SL PRS resource. Optionally, when the value of the time domain scheduling field is the fifth value, if the SL PRS resource is in an inactive state, the time domain scheduling field indicates to activate the SL PRS resource; or when the value of the time domain scheduling field is the sixth value, if the SL PRS resource is in an activated state, the time domain scheduling field indicates to deactivate the SL PRS resource. For example, when the value of the time domain scheduling field is all 1s, the time domain scheduling field indicates to activate the SL PRS resource; or when the value of the time domain scheduling field is all 0s, the time domain scheduling field indicates to deactivate the SL PRS resource.

A field length of the time domain scheduling field may be calculated based on a system-configured parameter. For example, the field length of the time domain scheduling field is determined based on a quantity of SL PRS resources. For another example, the field length of the time domain scheduling field is determined based on a maximum quantity of reserved resources. For example, the field length of the time domain scheduling field is 5 bits. When the 5 bits are 11111, the time domain scheduling field indicates to activate the SL PRS resource; or when the 5 bits are 00000, the time domain scheduling field indicates to deactivate the SL PRS resource.

Optionally, the fifth value and the sixth value are predefined, for example, predefined in a protocol. In other words, when the value of the time domain scheduling field is fixed to the fifth value, the time domain scheduling field indicates to activate the SL PRS resource; or when the value of the time domain scheduling field is fixed to the sixth value, the time domain scheduling field indicates to deactivate the SL PRS resource.

Optionally, the fifth value and/or the sixth value may be indicated by the network device. For example, the network device sends RRC signaling to the UE, where the RRC signaling is for configuring a first parameter and/or a second parameter, the first parameter indicates the fifth value, and the second parameter indicates the sixth value. In other words, the first parameter indicates that when the value of the time domain scheduling field is the fifth value, the time domain scheduling field indicates to activate the SL PRS resource; and the second parameter indicates that when the value of the time domain scheduling field is the sixth value, the time domain scheduling field indicates to deactivate the SL PRS resource.

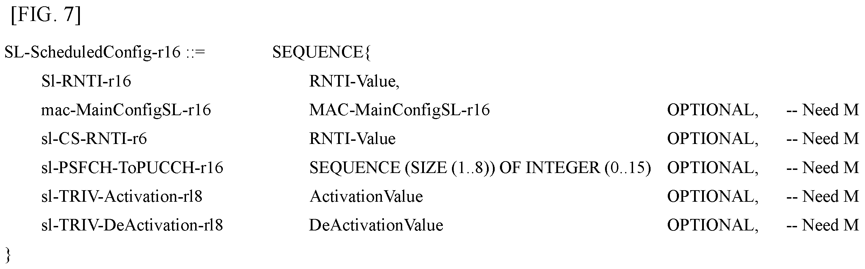

For example, for content configured by using the RRC signaling, refer to FIG. 7. In FIG. 7, two parameters sl-TRIV-Activation-r18 and sl-TRIV-DeActivation-r18 are configured in SL-ScheduledConfig-r16, and respectively correspond to the first parameter and the second parameter.

The DCI may further include a configuration index field, and a transmission period and/or a maximum quantity of transmissions of the SL PRS resource may be determined based on the configuration index field, so that the UE periodically activates or deactivates the SL PRS resource, and/or activates or deactivates the SL PRS resource based on the maximum quantity of transmissions.

Manner 4: The first field is a configuration index field, and the second field is a time domain scheduling field.

The configuration index field indicates a configuration index in RRC signaling, and the configuration index is associated with an SL PRS resource. The time domain scheduling field indicates to activate or deactivate the associated SL PRS resource. In Manner 4, the time domain scheduling field is also reused to indicate to activate or deactivate the SL PRS resource. For details, refer to the detailed descriptions of the time domain scheduling field in Manner 3. Details are not described herein again.

The configuration index field further indicates a transmission period and/or a maximum quantity of transmissions of the SL PRS resource, and then the UE may determine the transmission period and/or the maximum quantity of transmissions of the SL PRS resource based on the configuration index field, so that the UE periodically activates or deactivates the SL PRS resource, and/or activates or deactivates the SL PRS resource based on the maximum quantity of transmissions.

Manner 5: The first field is a resource indication field, and the second field is a resource indication field.

In Manner 5, the resource indication field may indicate an index of a currently scheduled SL PRS resource, and further indicate to activate or deactivate the SL PRS resource. In other words, the resource indication field has two functions: One function is to indicate the index of an SL PRS, and the other function is to indicate to activate or deactivate the SL PRS resource. Optionally, the resource indication field may be an SL PRS resource indication field, a resource ID indication field, or the like. For the resource ID indication field, refer to the specific explanation of the resource ID indication field in Manner 6.

Considering that an SL PRS does not need to be retransmitted, joint estimation may be performed through transmissions in a plurality of SL PRS resource periods to improve measurement accuracy. For example, refer to FIG. 6. In FIG. 6, an SL PRS is transmitted once in one semi-persistent resource period. Therefore, a value of another SL PRS resource index in the resource indication field other than a 1^{st} SL PRS resource index may indicate to activate or deactivate the SL PRS resource. Because a DCI transmission needs to be used to activate a plurality of transmissions of a semi-persistent SL PRS resource, to reduce indication overheads of the DCI, SL PRS resource indexes in different semi-persistent resource periods are designed to be the same, in other words, the semi-persistent SL PRS resource is for periodic transmission of a same SL PRS. A transmission period may be a period of physical slots, or may be a period of logical slots, in other words, in slots occupied by an SL system, an SL PRS resource is sent at a fixed time interval. Because the SL PRS is not retransmitted in one semi-persistent resource period, the resource indication field may be reused to indicate to activate or deactivate the SL PRS resource.

Optionally, when a value of the resource indication field is a first group of values, the resource indication field indicates to activate the SL PRS resource; or when a value of the resource indication field is a second group of values, the resource indication field indicates to deactivate the SL PRS resource. Optionally, when the value of the resource indication field is the first group of values and the SL PRS resource is in an inactive state, the resource indication field indicates to activate the SL PRS resource; or when the value of the resource indication field is a second group of values and the SL PRS resource is in an activated state, the resource indication field indicates to deactivate the SL PRS resource. The first group of values includes one or more values, and the second group of values includes one or more values. One group of values represents one or more values, one value represents an index of the SL PRS resource in one time unit, and the time unit is, for example, a slot. For example, the first group of values and the second group of values each include three values. In the three values, a 1^{st} value represents an index of the SL PRS resource in a 1^{st} slot, a 2^{nd} value represents an index of the SL PRS resource in a 2^{nd} slot, and a 3^{rd} value represents an index of the SL PRS resource in a 3^{rd} slot.

Optionally, when the value of the resource indication field is a seventh value, the resource indication field indicates to activate the SL PRS resource; or when the value of the resource indication field is an eighth value, the resource indication field indicates to deactivate the SL PRS resource. Optionally, when the value of the resource indication field is the seventh value and the SL PRS resource is in an inactive state, the resource indication field indicates to activate the SL PRS resource; or when the value of the resource indication field is the eighth value and the SL PRS resource is in an activated state, the resource indication field indicates to deactivate the SL PRS resource. The seventh value is different from the eighth value. The seventh value may be understood as an overall value of the first group of values, and the eighth value may be understood as an overall value of the second group of values. The first group of values and the second group of values each include three values, and each value is a value of 2 bits. In this case, the seventh value may be a value of the 6 bits, and the eighth value may be another value of the 6 bits.

It may be understood that, when the value of the resource indication field is the seventh value or the first group of values, the resource indication field indicates an index of the currently scheduled SL PRS resource and indicates to activate the SL PRS resource; or when the value of the resource indication field is the eighth value or the second group value, the resource indication field indicates the index of the currently scheduled SL PRS resource and indicates to deactivate the SL PRS resource.

Optionally, a 1^{st} SL PRS resource index indicated by the resource indication field indicates a 1^{st} SL PRS resource, and the UE defaults an index of a subsequent SL PRS resource to be the same as the index of the 1^{st} SL PRS resource. In addition, an i^{th} SL PRS resource index indicated by the resource indication field indicates to activate or deactivate the SL PRS resource. i is an integer greater than 1. The i^{th} SL PRS resource index represents an index of an SL PRS resource in an i^{th} time unit, the i^{th} time unit is, for example, an i^{th} slot, and the i^{th} slot is another slot other than a 1^{st} slot in scheduled slots. For example, if three slots are scheduled, the i^{th} slot may be a 2^{nd} slot or a 3^{rd} slot. In other words, the i^{th} SL PRS resource index does not indicate an i^{th} SL PRS resource, but indicates to activate or deactivate the SL PRS resource. Optionally, when the i^{th} SL PRS resource index indicated by the resource indication field is a ninth value or a third group of values, if the SL PRS resource is in an inactive state, the i^{th} SL PRS resource index indicates to activate the SL PRS resource; or when the i^{th} SL PRS resource index indicated by the resource indication field is a tenth value or a fourth group of values, if the SL PRS resource is in an activated state, the i^{th} SL PRS resource index indicates to deactivate the SL PRS resource. The ninth value may be understood as a value (not a value of an SL PRS resource index in the 1^{st} slot) in the first group of values, and the tenth value may be understood as a value (not a value of an SL PRS resource index in the 1^{st} slot) in the second group of values. The third group of values includes one or more values, and the fourth group of values includes one or more values. In other words, when a value of the i^{th} SL PRS resource index is any value in the third group of values, the i^{th} SL PRS resource index may indicate to activate the SL PRS resource; or when a value of the i^{th} SL PRS resource index is any value in the fourth group of values, the i^{th} SL PRS resource index may indicate to deactivate the SL PRS resource.

For example, when an SL PRS resource index in the 2^{nd} slot indicated by the resource indication field is all 1s, the SL PRS resource index indicates to activate the SL PRS resource; or when the SL PRS resource index in the 2^{nd} slot is all 0s, the SL PRS resource index indicates to deactivate the SL PRS resource. Alternatively, when an SL PRS resource index in the 3^{rd} slot indicated by the resource indication field is all 1s, the SL PRS resource index indicates to activate the SL PRS resource; or when the SL PRS resource index in the 3^{rd} slot is all 0s, the SL PRS resource index indicates to deactivate the SL PRS resource.

Optionally, the seventh value and the eighth value are predefined. Alternatively, the first group of values and the second group of values are predefined. Alternatively, the ninth value and the tenth value are predefined. Alternatively, the third group of values and the fourth group of values are predefined. Optionally, the ninth value and/or the tenth value may be indicated by a network device. Alternatively, the third group of values and/or the fourth group of values may be indicated by the network device. For example, the network device sends RRC signaling to the UE, where the RRC signaling is for configuring a third parameter and/or a fourth parameter, the third parameter indicates the ninth value, and the fourth parameter indicates the tenth value; or the third parameter indicates the third group of values, and the fourth parameter indicates the fourth group of values.

For example, for content configured by using the RRC signaling, refer to FIG. 7. In FIG. 7, two parameters sl-TRIV-Activation-r18 and sl-TRIV-DeActivation-r18 are configured in SL-ScheduledConfig-r16, and respectively correspond to the third parameter and the fourth parameter.

The DCI may further include a configuration index field, and a transmission period and/or a maximum quantity of transmissions of the SL PRS resource may be determined based on the configuration index field, so that the UE periodically activates or deactivates the SL PRS resource, and/or activates or deactivates the SL PRS resource based on the maximum quantity of transmissions.

Manner 6: The first field is a first resource indication field, and the second field is a second resource indication field.

In Manner 6, the first resource indication field indicates a to-be-activated or to-be-deactivated SL PRS resource, and the second resource indication field indicates to activate or deactivate the SL PRS resource. The first resource indication field indicates an SL PRS resource in a 1^{st} slot, and an index of an SL PRS resource in a future slot is the same as an index of the SL PRS resource in the 1^{st} slot by default. Optionally, the first resource indication field may be a first SL PRS indicator field in DCI, and the second resource indication field may be a resource ID indication field in the DCI.

Considering that an SL PRS does not need to be retransmitted, there is no need for the second resource indication field to indicate a reserved non-periodic SL PRS resource, and then the second resource indication field may be reused to indicate to activate or deactivate the SL PRS resource corresponding to the first resource indication field.

The DCI in Manner 6 may be DCI format3_2, and the DCI may include one or more of the following fields:

-a resource pool index field (Resource pool index), where a field length of the field is a quantity of bits obtained by rounding up log₂I; *I* is a total quantity of resource pools configured by using a higher layer parameter, or a total quantity of resource pools that are configured by using a higher layer parameter and that are for SL PRS transmission, or a total quantity of SL PSR-dedicated resource pools configured by using a higher layer parameter; and the field indicates a resource pool to which a currently scheduled SL PRS resource belongs;

-a time gap field (Time Gap), where a field length of the field is 3 bits, and the field indicates a slot offset between transmission time of the SL PRS resource and a slot in which the DCI is received;
- a 1^{st} SL PRS indication field (First SL PRS indicator), where the field indicates a 1^{st} SL PRS resource, in other words, an SL PRS in a 1^{st} slot, and an index of an SL PRS resource in a future slot is the same as an index of an SL PRS resource in the 1^{st} slot by default; and
- SCI format1-B fields according to clause 8.3.1.2:
- a time domain scheduling field (Time resource assignment), where the field indicates slot information of the currently scheduled SL PRS resource;
- a resource indication field (Resource ID indication), where the field indicates a reserved non-periodic SL PRS resource, and in Manner 7, indicates to activate or deactivate the SL PRS resource; and
- a configuration index field (Configuration index), where the field indicates a configuration index in RRC signaling, for example, a configuration index in first RRC signaling or a configuration index in second RRC signaling; and if the field indicates the configuration index in the second RRC signaling, an SL PRS resource indicated by the 1^{st} SL PRS indication field is included in at least one SL PRS resource associated with the configuration index.

Optionally, when a value of the second resource indication field is an eleventh value, the second resource indication field indicates to activate the SL PRS resource; or when a value of the second resource indication field is a twelfth value, the second resource indication field indicates to deactivate the SL PRS resource.

The eleventh value and the twelfth value may be predefined. Alternatively, the eleventh value and/or the twelfth value may be indicated by a network device. For indication of the eleventh value and/or the twelfth value by the network device, refer to indication of the fifth value and/or the sixth value by the network device.

Manner 7: The first field is a configuration index field, and the second field is a resource indication field.

The configuration index field indicates a configuration index in RRC signaling, and the configuration index is associated with an SL PRS resource. The resource indication field indicates to activate or deactivate the associated SL PRS resource. The RRC signaling may be the foregoing second RRC signaling.

When the configuration index is associated with an SL PRS field, the resource indication field may not need to indicate the SL PRS resource, and the field indicates to activate or deactivate the associated SL PRS resource. For indication to activate or deactivate an SL PRS by the resource indication field, refer to the detailed descriptions in Manner 5. Details are not described herein again. Optionally, the resource indication field may alternatively be the second resource indication field in Manner 6.

The configuration index field further indicates a transmission period and/or a maximum quantity of transmissions of the SL PRS resource, and then the UE may determine the transmission period and/or the maximum quantity of transmissions of the SL PRS resource based on the configuration index field, so that the UE periodically activates or deactivates the SL PRS resource, and/or activates or deactivates the SL PRS resource based on the maximum quantity of transmissions.

Manner 1 to Manner 7 are used as examples. In this embodiment of this application, a possibility that another field in the DCI is reused to indicate to activate or deactivate the SL PRS resource is not excluded.

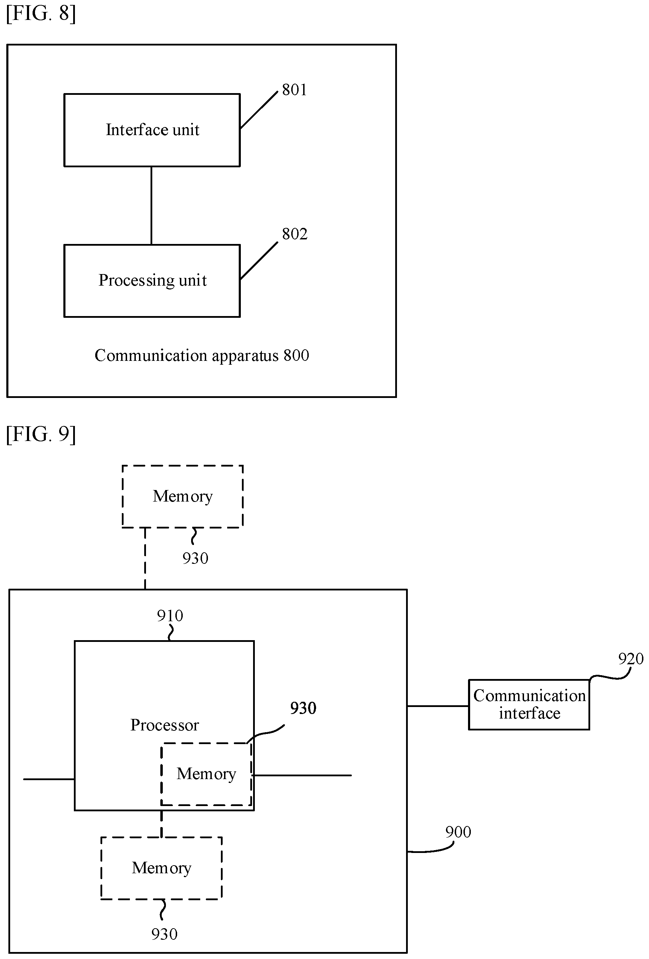

This application provides a communication apparatus, and the communication apparatus may be configured to implement functions of the UE or the network device. The communication apparatus may be UE or a network device. The communication apparatus includes units that are in one-to-one correspondence with the methods/operations/steps/actions performed by the UE or the network device in the foregoing method embodiments. The units may be implemented by a hardware circuit, software, or a combination of the hardware circuit and software. FIG. 8 is a diagram of a structure of a communication apparatus 800 according to an embodiment of this application. The communication apparatus 800 may include an interface unit 801 and a processing unit 802. Specifically, the processing unit 802 is configured to process signaling and/or data. The signaling and/or data may be data received by the interface unit 801, and processed signaling and/or data may also be sent by the interface unit 801.

In an implementation, when the communication apparatus 800 is UE,
the interface unit 801 is configured to receive downlink control information from a network device, where the downlink control information includes a first field and a second field, the first field is for determining a sidelink positioning reference signal resource, and the second field indicates to activate or deactivate the sidelink positioning reference signal resource; and
the processing unit 802 is configured to: in response to a value of the second field, activate the sidelink positioning reference signal resource; or in response to a value of the second field, deactivate the sidelink positioning reference signal resource.

In this implementation, for specific implementations of the interface unit 801 and the processing unit 802, refer to specific implementation steps of the UE in FIG. 4. Details are not described herein again.

In another implementation, when the communication apparatus shown in FIG. 8 is a network device,
the interface unit 801 is configured to send downlink control information to a terminal device, where the downlink control information includes a first field and a second field, the first field is for determining a sidelink positioning reference signal resource, and the second field indicates to activate or deactivate the positioning reference signal resource.

In this implementation, for specific implementations of the interface unit 801 and the processing unit 802, refer to specific implementation steps of the network device in FIG. 4. Details are not described herein again.

FIG. 9 shows a communication apparatus 900 according to an embodiment of this application, and the communication apparatus 900 is configured to implement functions of the UE and the network device. The apparatus may be a communication device or an apparatus used in the communication device. The communication device may be UE or a network device. The apparatus used in the communication device may be a chip system or a chip in the communication device. The chip system may include a chip, or may include a chip and another discrete component.

The communication apparatus 900 includes at least one processor 910, configured to implement a processing function of a device (for example, UE or a network device) in the method provided in embodiments of this application. The communication apparatus 900 may further include a communication interface 920, configured to implement receiving and sending operations of a device (for example, UE or a network device) in the method provided in embodiments of this application. In embodiments of this application, the communication interface may be a transceiver, a circuit, a bus, a module, or another type of communication interface, and is configured to communicate with another device through a transmission medium. For example, the communication interface 920 is used by an apparatus in the communication apparatus 900 to communicate with the another device. The processor 910 receives and sends data through the communication interface 920, and is configured to implement the method in the foregoing method embodiments.

The communication apparatus 900 may further include at least one memory 930, configured to store program instructions and/or data. The memory 930 is coupled to the processor 910. The coupling in this embodiment of this application may be an indirect coupling or a communication connection between apparatuses, units, or modules in an electrical form, a mechanical form, or another form, and is used for information exchange between the apparatuses, the units, or the modules. The processor 910 may operate cooperatively with the memory 930. The processor 910 may execute the program instructions stored in the memory 930. At least one of the at least one memory may be included in the processor.

A specific connection medium between the communication interface 920, the processor 910, and the memory 930 is not limited in embodiments of this application. In an embodiment of this application, in FIG. 9, the memory 930, the processor 910, and the communication interface 920 are connected through a bus, and the bus is represented using a thick line in FIG. 9. A connection manner between other components is merely an example for description, and imposes no limitation. The bus may be classified into an address bus, a data bus, a control bus, and the like. For ease of representation, only one thick line is used to represent the bus in FIG. 9, but this does not mean that there is only one bus or only one type of bus.

When the communication apparatus 900 is specifically an apparatus used in a device (for example, UE or a network device), for example, when the communication apparatus 900 is specifically a chip or a chip system, the communication interface 920 may output or receive a baseband signal. When the communication apparatus 900 is specifically a device (for example, UE or a network device), the communication interface 920 may output or receive a radio frequency signal. In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any regular processor, or the like. The steps of the method disclosed with reference to embodiments of this application may be directly performed by a hardware processor, or may be performed by using a combination of hardware in the processor and a software module.

It should be noted that the communication interface 920 may be configured to perform a function of the interface unit 801, and the processor 910 may be configured to perform a function of the processing unit 802. Details are not described herein again.

When the communication apparatus is a chip used in UE, the chip implements a function of the UE in the foregoing method embodiments. The chip receives information from another device, or the chip sends information to another device.

When the communication apparatus is a chip used in a network device, the chip implements a function of the network device in the foregoing method embodiments. The chip receives information from another device, or the chip sends information to another device.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

The method steps in embodiments of this application may be implemented in a hardware manner, or may be implemented in a manner of executing software instructions by the processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk drive, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in an access network device or a terminal. Certainly, the processor and the storage medium may alternatively exist in a terminal or an access network device as discrete components.

All or a part of the foregoing embodiments may be implemented by software, hardware, firmware, or any combination thereof. When software is used to implement embodiments, all or a part of embodiments may be implemented in a form of a computer program product. The computer program product includes one or more computer programs or instructions. When the computer program or instructions are loaded and executed on a computer, procedures or functions in embodiments of this application are all or partially performed. The computer may be a general-purpose computer, a dedicated computer, a computer network, or another programmable apparatus. The computer programs or the instructions may be stored in a computer-readable storage medium, or may be transmitted through the computer-readable storage medium. The computer-readable storage medium may be any usable medium accessible by the computer, or a data storage device, for example, a server, integrating one or more usable media. The usable medium may be a magnetic medium, for example, a floppy disk, a hard disk drive, or a magnetic tape; or may be an optical medium, for example, a DVD; or may be a semiconductor medium, for example, a solid-state drive (solid-state drive, SSD).

In various embodiments of this application, unless otherwise stated or a logic conflict occurs, terms and/or descriptions in different embodiments are consistent and may be mutually referenced, and technical features in different embodiments may be combined into a new embodiment based on an internal logical relationship thereof.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

An embodiment of this application further provides a computer-readable storage medium. The computer-readable storage medium stores computer-executable instructions. When the computer-executable instructions are executed, the method performed by the UE or the network device in the foregoing method embodiments is implemented.

An embodiment of this application further provides a computer program product. The computer program product includes a computer program. When the computer program is executed, the method performed by the UE or the network device in the foregoing method embodiments is implemented.

It should be noted that, for each of the foregoing method embodiments, for ease of description, the method embodiments are described as a series of action combination. But a person skilled in the art is to know that this application is not limited to any described sequence of the action, as some operations can use other sequences or can be executed simultaneously according to this application. In addition, a person skilled in the art is also to learn that embodiments described in this specification are all example embodiments, and the involved actions and modules are not necessarily required to this application.

The descriptions of embodiments provided in this application may be mutually referenced, and the descriptions of embodiments have different focuses. For a part not described in detail in an embodiment, refer to the related descriptions in another embodiment. For the purpose of convenient and brief descriptions, for example, for functions of the apparatuses and devices provided in embodiments of this application and performed steps, refer to the related descriptions in the method embodiments of this application. The method embodiments and the apparatus embodiments may also be mutually referenced, combined, or cited.

Finally, it should be noted that the foregoing embodiments are merely intended for describing the technical solutions of this application other than limiting this application. Although this application is described in detail with reference to the foregoing embodiments, a person of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. A sidelink positioning reference signal resource scheduling method, wherein the method comprises:
receiving downlink control information from a network device, wherein the downlink control information comprises a first field and a second field, the first field is for determining a sidelink positioning reference signal resource, and the second field indicates to activate or deactivate the sidelink positioning reference signal resource; and
in response to a value of the second field, activating the sidelink positioning reference signal resource; or
in response to a value of the second field, deactivating the sidelink positioning reference signal resource.

2. The method according to claim 1, wherein the second field is an activation indication field, and a field length of the activation indication field is 1 bit; and when a value of the activation indication field is a first value and the sidelink positioning reference signal resource is in an inactive state, the activation indication field indicates to activate the sidelink positioning reference signal resource; or when a value of the activation indication field is a second value and the sidelink positioning reference signal resource is in an activated state, the activation indication field indicates to deactivate the sidelink positioning reference signal resource, wherein
the first value is the same as or different from the second value.

3. The method according to claim 1, wherein the second field is an activation indication field, and a field length of the activation indication field is 2 bits; and when a value of the activation indication field is a third value, the activation indication field indicates to activate the sidelink positioning reference signal resource; or
when a value of the activation indication field is a fourth value, the activation indication field indicates to deactivate the sidelink positioning reference signal resource, wherein
the third value is different from the fourth value.

4. The method according to claim 1, wherein the second field is a time domain scheduling field; and
when a value of the time domain scheduling field is a fifth value, the time domain scheduling field indicates to activate the sidelink positioning reference signal resource; or
when a value of the time domain scheduling field is a sixth value, the time domain scheduling field indicates to deactivate the sidelink positioning reference signal resource, wherein
the fifth value is different from the sixth value.

5. The method according to claim 4, wherein the method further comprises:
receiving a first parameter and/or a second parameter from the network device, wherein the first parameter indicates the fifth value, and the second parameter indicates the sixth value.

6. The method according to claim 1, wherein the second field is a resource indication field; and
when a value of the resource indication field is a seventh value or a first group of values, the resource indication field indicates to activate the sidelink positioning reference signal resource; or
when a value of the resource indication field is an eighth value or a second group of values, the resource indication field indicates to deactivate the sidelink positioning reference signal resource, wherein
the seventh value is different from the eighth value, the first group of values comprises one or more values, and the second group of values comprises one or more values.

7. The method according to claim 6, wherein when an i^{th} sidelink positioning reference signal resource index indicated by the resource indication field is a ninth value or a third group of values, the resource indication field specifically indicates to activate the sidelink positioning reference signal resource; or
when an i^{th} sidelink positioning reference signal resource index indicated by the resource indication field is a tenth value or a fourth group of values, the resource indication field specifically indicates to deactivate the sidelink positioning reference signal resource, wherein
i is an integer greater than 1, the third group of values comprises one or more values, and the fourth group of values comprises one or more values.

8. The method according to claim 7, wherein the method further comprises:
receiving a third parameter and/or a fourth parameter from the network device, wherein the third parameter indicates the ninth value or the third group of values, and the fourth parameter indicates the tenth value or the fourth group of values.

9. The method according to any one of claims 1 to 8, wherein the first field is a resource indication field, and the resource indication field indicates an index of the sidelink positioning reference signal resource.

10. The method according to claim 9, wherein the downlink control information further comprises a configuration index field, and the configuration index field is for determining a transmission period and/or a maximum quantity of transmissions of the sidelink positioning reference signal resource.

11. The method according to claim 9, wherein the method further comprises:
receiving first radio resource control signaling from the network device, wherein the first radio resource control signaling is for configuring the transmission period and/or the maximum quantity of transmissions.

12. The method according to any one of claims 1 to 8, wherein the first field is a configuration index field, the configuration index field indicates a configuration index, and the configuration index is associated with the sidelink positioning reference signal resource.

13. The method according to claim 12, wherein the configuration index field is further for determining a transmission period and/or a maximum quantity of transmissions of the sidelink positioning reference signal resource.

14. The method according to claim 12, wherein the method further comprises:
receiving second radio resource control signaling from the network device, wherein the second radio resource control signaling is for configuring at least one of the transmission period, the maximum quantity of transmissions, the configuration index, or the sidelink positioning reference signal resource associated with the configuration index.

15. A positioning reference signal resource scheduling method, wherein the method comprises:
sending downlink control information to a terminal device, wherein the downlink control information comprises a first field and a second field, the first field is for determining a sidelink positioning reference signal resource, and the second field indicates to activate or deactivate the positioning reference signal resource.

16. The method according to claim 15, wherein the second field is an activation indication field, and a field length of the activation indication field is 1 bit; and when a value of the activation indication field is a first value and the sidelink positioning reference signal resource is in an inactive state, the activation indication field indicates to activate the sidelink positioning reference signal resource; or when a value of the activation indication field is a second value and the sidelink positioning reference signal resource is in an activated state, the activation indication field indicates to deactivate the sidelink positioning reference signal resource, wherein
the first value is the same as or different from the second value.

17. The method according to claim 15, wherein the second field is an activation indication field, and a field length of the activation indication field is 2 bits; and when a value of the activation indication field is a third value, the activation indication field indicates to activate the sidelink positioning reference signal resource; or
when a value of the activation indication field is a fourth value, the activation indication field indicates to deactivate the sidelink positioning reference signal resource, wherein
the third value is different from the fourth value.

18. The method according to claim 15, wherein the second field is a time domain scheduling field; and
when a value of the time domain scheduling field is a fifth value, the time domain scheduling field indicates to activate the sidelink positioning reference signal resource; or
when a value of the time domain scheduling field is a sixth value, the time domain scheduling field indicates to deactivate the sidelink positioning reference signal resource, wherein
the fifth value is different from the sixth value.

19. The method according to claim 18, wherein the method further comprises:
sending a first parameter and/or a second parameter to the terminal device, wherein the first parameter indicates the fifth value, and the second parameter indicates the sixth value.

20. The method according to claim 15, wherein the second field is a resource indication field; and
when a value of the resource indication field is a seventh value or a first group of values, the resource indication field indicates to activate the sidelink positioning reference signal resource; or
when a value of the resource indication field is an eighth value or a second group of values, the resource indication field indicates to deactivate the sidelink positioning reference signal resource, wherein
the seventh value is different from the eighth value, the first group of values comprises one or more values, and the second group of values comprises one or more values.

21. The method according to claim 20, wherein when an i^{th} sidelink positioning reference signal resource index indicated by the resource indication field is a ninth value or a third group of values, the resource indication field specifically indicates to activate the sidelink positioning reference signal resource; or
when an i^{th} sidelink positioning reference signal resource index indicated by the resource indication field is a tenth value or a fourth group of values, the resource indication field specifically indicates to deactivate the sidelink positioning reference signal resource, wherein
i is an integer greater than 1, the third group of values comprises one or more values, and the fourth group of values comprises one or more values.

22. The method according to claim 21, wherein the method further comprises:
sending a third parameter and/or a fourth parameter to the terminal device, wherein the third parameter indicates the ninth value or the third group of values, and the fourth parameter indicates the tenth value or the fourth group of values.

23. The method according to any one of claims 15 to 22, wherein the first field is a resource indication field, and the resource indication field indicates an index of the sidelink positioning reference signal resource.

24. The method according to any one of claims 15 to 22, wherein the first field is a configuration index field, the configuration index field indicates a configuration index, and the configuration index is associated with the sidelink positioning reference signal resource.

25. A communication apparatus, comprising a module configured to perform the method according to any one of claims 1 to 14 or a module configured to perform the method according to any one of claims 15 to 24.

26. A communication apparatus, comprising a processor, wherein the processor is configured to implement the method according to any one of claims 1 to 14 or the method according to any one of claims 15 to 24 by using a logic circuit and/or by executing a computer program or instructions.

27. The communication apparatus according to claim 26, further comprising a memory, configured to store the computer program or the instructions.

28. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor is configured to implement the method according to any one of claims 1 to 14 or the method according to any one of claims 15 to 24 by using a logic circuit or by executing code instructions.

29. A computer-readable storage medium, wherein the storage medium stores a computer program or instructions, and when the computer program or the instructions are executed by a communication apparatus, the method according to any one of claims 1 to 14 or the method according to any one of claims 15 to 24 is implemented.

30. A computer program product, comprising computer program code, wherein when the computer program code is run, the method according to any one of claims 1 to 14 or the method according to any one of claims 15 to 24 is implemented.
